# EUROPÄISCHE PATENTSCHRIFT

(11) **EP 0 735 443 B1**
(45) Veröffentlichungstag und Bekanntmachung des Hinweises auf die Patenterteilung: **24.11.1999**
(21) Anmeldenummer: 96104066.4
(22) Anmeldetag: 14.03.1996
(51) Int. Cl.: G05B 19/18, G05B 13/02

(54) **Neuronales Netz zur Positionsabweichungskompensation bei Werkstückbearbeitungseinrichtungen**
Neural network for compensating a position deviation in machining equipments for work pieces
Réseau neuronal pour compenser une déviation de position dans une installation d'usinage de pièces

(30) Priorität: 28.03.1995 DE 19511424
(43) Veröffentlichungstag der Anmeldung: 02.10.1996
(73) Patentinhaber: SIEMENS AKTIENGESELLSCHAFT, 80333 München (DE)
(72) Erfinder: Heyen, Holger, 42859 Remscheid (DE); Kubitz, Dietmar, Dipl.-Ing., 41564 Kaarst (DE); Lücker, Stefan, Dipl.-Ing., 42281 Wuppertal (DE); Gebhardt, Thomas, 40789 Monheim (DE)

(56) Entgegenhaltungen:
- EP-A- 0 589 394
- EP-A- 0 641 624
- US-A- 5 109 275

## Beschreibung

Die Erfindung betrifft ein Verfahren zur Kompensation von verfälschenden Einflüssen bei der Positionierung von Werkstücken oder Werkzeugen einer Werkstückbearbeitungseinrichtung durch Bildung von Korrekturwerten der verfälschenden Einflüsse, wobei Eingangsgrõßen verwendet werden, die die verfälschenden Einflußgrößen repräsentieren.

Die Kompensation von die Positionierung verfälschenden Einflüssen bei Werkstückbearbeitungseinrichtungn durch konstruktive Maßnahmen ist sehr aufwendig. Darüberhinaus ist eine solche Kompensation nur in Einzelfällen anwendbar. Daher sind kompensatorisch arbeitende Verfahren, bei denen geregelt und/oder gesteuert wird, entwickelt worden. Aus der DE-A1 36 20 118 ist z.B. bekannt, thermisch bedingte Ausdehnungen durch eine Steuerung zu kompensieren, wobei der Umfang der thermisch bedingten Ausdehnungen durch Messungen an einem Referenzwerkstück bestimmt wird.

Aus der DD-209 765 ist ebenfalls bekannt, thermisch bedingte Ausdehnung durch eine Steuerung zu kompensieren. Dabei werden der Steuerung die Temperaturen von verschiedenen Teilen, insbesondere an einer Arbeitsspindel der Werkstückbearbeitungseinrichtung, zugeführt.

Weder die DE-A1-36 20 118 noch die DD-209 765 enthalten eine Lehre in bezug auf die Art der Kompensation in der Steuerung.

Es ist weiterhin allgemein bekannt, Positionsabweichungen eines Werkstücks oder Werkzeugs durch im Voraus gemessene Kompensationswerte, die als Stützstellen für eine Interpolation verwendet werden, zu kompensieren. An diesem Verfahren ist nachteilig, daß bereits für eine nur relativ genaue Kompensation diese Kompensationsstützstellen eine hohe Speicherkapazität benötigen. Außerdem ist diese Methode abweichungsbehaftet, da z.B. Funktionen zur Bestimmung von Korrekturwerten für die Gewichts- und Temperaturkompensation nicht lineare Funktionen mehrerer Veränderlicher sind. Ein Interpolationsverfahren, das diese nichtlinearen Zusammenhänge berücksichtigt ist sehr aufwendig, zumal diese Zusammenhänge als mathematisches Modell formuliert werden müssen.

Die EP 0 641 624 A1 offenbart eine Werkzeugmaschine mit einem Werkzeug, das relativ zu einem Werkstück bewegbar ist. An der Werkzeugmaschine sind mehrere Temperatursensoren vorgesehen, deren Meßwerte zur Kompensation von thermischer Verformung mittels eines neuronalen Netzwerks verwendet werden.

Die EP 0 589 394 A1 offenbart einen Roboter, der zur Verringerung von Positionierungsabweichungen ein neuronales Netzwerk aufweist.

Aufgabe der Erfindung ist es, ein präziseres und mit geringerem Aufwand durchführbares bzw. ein robusteres Verfahren zur Kompensation von verfälschenden Einflüssen bei der Positionierung von Werkstücken oder Werkzeugen einer Werkstückbearbeitungseinrichtung als mit dem bekannten Verfahren angegeben.

Die Aufgabe wird erfindungsgemäß dadurch gelöst, daß Eingangsgrößen, die die verfälschenden Einflußgrößen repräsentieren, einer auf trainierbaren neuronalen Netzen basierenden Informationsverarbeitung zugeführt werden, die Korrekturwerte bildet, mit denen eine Kompensation dieser verfälschenden Einflußgrößen vorgenommen werden kann, wobei die auf trainierbaren neuronalen Netzen basierende Informationsbearbeitung in zwei Hierarchieebenen, Hierarchieebene I und Hierarchieebene II, aufgeteilt ist, wobei die neuronalen Netze der Hierarchieebene I vor der Inbetriebsetzung und die der Hierarchieebene II auch in der Betriebsphase trainiert werden.

An einer Verwendung einer auf trainierbaren neuronalen Netzen basierenden Informationsverarbeitung zur Kompensation von verfälschenden Einflüssen bei der Positionierung ist vorteilhaft, daß sich mit dieser Art der Informationsverarbeitung die nicht linearen Zusammenhänge zwischen die Positionierung verfälschenden Einflüssen und deren Wirkung schnell und präzise modellieren lassen. Dabei kann auf eine aufwendige und teuere mathematische Analyse der Werkstückbearbeitungseinrichtung, sofern diese überhaupt möglich ist, verzichtet werden. Bei Verwendung einer auf trainierbaren neuronalen Netzen basierenden Informationsverarbeitung werden dieser keine analytischen Zusammenhänge, sondern ein repräsentativer Querschnitt der die Positionierung verfälschenden Einflüsse sowie ihrer Wirkung, zugeführt. Dabei entwickelt die auf trainierbaren neuronalen Netzen basierende Informationsverarbeitung quasi die zur Kompensation notwendigen Modelle und die Kompensationsgesetze selbsttätig in einem Schritt. Durch die dadurch erreichte Flexibilität sind für einzelne Werkstückbearbeitungseinrichtungen individuelle Lösungen möglich, wodurch ein hohes Maß an Präzision bei der Kompensation erreicht wird. Dabei wird gleichzeitig eine robuste und zuverlässige Informationsverarbeitung erreicht, da der Informationsgehalt der vor der Inbetriebsetzung trainierten neuronalen Netze auf Hierarchieebene I bei einem Nachtraining erhalten bleibt, wobei die Erfahrungen, die im Betrieb gesammelt werden, in Form eines Expertensystems in neuronalen Netzen auf der Hierarchieebene II aufbereitet werden können.

In einer vorteilhaften Ausgestaltung der Erfindung sind die Korrekturwerte der verfälschenden Einflüsse bei der Positionierung Sollpositionen der Werkstücke oder Werkzeuge. Dadurch kann zur Korrektur der verfälschenden Einflüsse bei der Positionierung die vorhandene Aktorik zur Positionierung verwendet werden, d.h. eigene Aktoren zur Kompensation sind nicht notwendig. Damit ist außerdem für die Informationsverarbeitung zur Kompensation der verfälschenden Einflüsse bei der Positionierung keine eigene funktionale Schnittstelle zur Werkstückbearbeitungseinrichtung notwendig. Dabei kann bei Verwendung der Sollposition, im Gegensatz zum direkten Einwirken auf den Aktor auch eine Einbeziehung der Aktorenregelung in die Modellbildung der auf trainierbaren neuronalen Netzen basierenden Informationsverarbeitung verzichtet werden, die Modellbildung ist unabhängig von der Regelung.

In einer weiteren vorteilhaften Ausgestaltung der Erfindung sind die Korrekturwerte der verfälschenden Einflüsse bei der Positionierung Kompensationswerte, aus denen durch Verknüpfung mit der Sollposition eine korrigierte Sollposition bestimmt wird. Diese Ausgestaltung ermöglicht ein effizienteres Training durch Verteilung auf mehrere neuronale Netze.

In einer weiteren vorteilhaften Ausgestaltung der Erfindung werden vorzugsweise die verfälschenden Einflüsse - Temperatur der Werkstückbearbeitungseinrichtung und Gewicht des Werkstücks oder Werkzeugs - kompensiert. An dieser Auswahl ist vorteilhaft, daß der Trainingsaufwand der neuronalen Netze verringert wird, wobei die wesentlichen verfälschenden Einflußfaktoren bei der Positionierung erfaßt sind.

In einer weiteren vorteilhaften Ausgestaltung der Erfindung werden von der auf trainierbaren neuronalen Netzen basierenden Informationsverarbeitung Korrekturwerte der verfälschenden Einflüsse gebildet, die absolute Abweichungen der Position darstellen, aus denen sich durch Addition mit der Sollposition des Werkstücks oder Werkzeugs eine korrigierte Sollposition ergibt. Bei annähernder Proportionalität zwischen einer verfälschenden Einflußgröße und der Position des Werkstücks oder Werkzeugs wird diese erfinderische Ausgestaltung dadurch vorteilhaft ersetzt, daß Korrekturwerte der verfälschenden Einflüsse bei der Positionierung Proportionalitätsfaktoren der Position sind, aus denen sich durch Multiplikation mit der Sollposition des Werkstücks oder Werkzeugs eine korrigierte Sollposition ergibt. An dieser Ausgestaltung ist vorteilhaft, daß die Position des Werkstücks oder Werkzeugs nicht der auf trainierbaren neuronalen Netzen basierenden Informationsverarbeitung als Eingangsgröße zugeführt werden muß, wodurch sich der Trainingsaufwand dieser Informationsverarbeitung verringert.

In einer weiteren vorteilhaften Ausgestaltung der Erfindung wird die auf trainierbaren neuronalen Netzen basierende Informationsverarbeitung in neuronale Temperaturkompensationsnetze, die überwiegend die verfälschende Einflußgröße - Temperatur der Werkstückbearbeitungseinrichtung - kompensiert und neuronale Gewichtskompensationsnetze, die überwiegend die verfälschende Einflußgröße - Gewicht des Werkstückes oder Werkzeuges - kompensiert, geteilt. An dieser Entflechtung der auf trainierbaren neuronalen Netzen basierenden Informationsverarbeitung ist vorteilhaft, daß sich bei gleichbleibender Präzision der Kompensation der Trainingsaufwand - bei hinreichend unabhängiger Wirkung der beiden verfälschenden Einflüsse - deutlich verringert.

In einer weiterhin vorteilhaften Ausgestaltung der Erfindung ist mindestens eine der Größen Temperatur an verschiedenen Teilen der Werkstückbearbeitungseinrichtung, Motorstrom, Kühlmitteltemperatur der Werkstückbearbeitungseinrichtung, Umgebungstemperatur, Vorschubgeschwindigkeit bei der Positionierung des Werkzeugs oder des Werkstücks oder Zeit einer Eingangsgröße der Temperaturkompensationsnetze . An dieser Ausgestaltung ist vorteilhaft, daß alle wesentlichen Größen, die Einfluß auf die Verfälschung der Positionierung aufgrund der Temperatur haben, der auf trainierbaren neuronalen Netzen basierende Informationsverarbeitung zugeführt werden. Es ist insbesondere vorteilhaft, daß durch die Eingangsgrößen - Motorstrom, Kühlmitteltemperatur der Werkstückbearbeitungseinrichtung, Umgebungstemperatur, Vorschubgeschwindigkeit bei der Positionierung des Werkzeugs oder des Werkstücks oder der Zeit - Temperaturmeßstellen an der Werkstückbearbeitungsrichtung eingespart werden können.

In einer weiteren vorteilhaften Ausgestaltung der Erfindung werden Temperaturkompensationsnetzen keine Temperaturen von schnell beweglichen, insbesondere rotierenden Teilen der Werkstückbearbeitungseinrichtung als Eingangsgrößen zugeführt, wodurch Kosten gespart werden können, da Temperaturmessungen an schnell beweglichen, insbesondere schnell rotierenden Teilen teuer sind.

In einer weiterhin vorteilhaften Ausgestaltung der Erfindung setzt sich ein durch Temperaturkompensationsnetze erzeugter Korrekturwert aus mehreren Anteilen zusammen, wobei diese Anteile von separaten neuronalen Netzen erzeugt werden, deren Eingangsgröße mindestens eine der Größen Temperaturen an unterschiedlichen Stellen der Werkstückbearbeitungseinrichtung, Motorstrom, Kühlmitteltemperatur der Werkstückbearbeitungseinrichtung, Umgebungstemperatur, Vorschubsgeschwindigkeit bei der Positionierung des Werkzeugs oder Werkstücks oder Zeit sind. Durch diese Ausgestaltung kann der Trainingsaufwand weiter verringert werden.

In einer weiterhin vorteilhaften Ausgestaltung der Erfindung werden für Last und Leerlauf der Werkstückbearbeitungseinrichtung separate neuronale Netze zur Kompensation des die Positionierung verfälschenden Einflusses - Temperatur - verwendet. Durch diese Ausgestaltung kann der Trainingsaufwand der auf trainierbaren neuronalen Netzen basierenden Informationsverarbeitung weiter verringert werden.

In einer weiterhin vorteilhaften Ausgestaltung der Erfindung sind die Eingangsgrößen der Gewichtskompensationsnetze mindestens eine der Größen - Gewicht des Werkstücks oder Werkzeugs, Position des Werkstücks oder Werkzeugs, Motordrehzahl oder Drehzahl der rotierenden Teile. Vorteilhaft an dieser Ausgestaltung ist, daß sich mit diesen Eingangsgrößen ein hohes Maß an Präzisioin bei der Kompensation erreichen läßt.

In einer weiterhin vorteilhaften Ausgestaltung haben die neuronalen Netze der Informationsverarbeitung zur Kompensation der die Positionierung verfälschenden Einflüsse verdeckte Neuronen, die durch einen Tangenshyperbolikus aktiviert werden. An dieser Ausgestaltung ist vorteilhaft, daß sich der Trainingsaufwand für diese neuronalen Netze weiter verringert.

In einer weiterhin vorteilhaften Ausgestaltung der Erfindung werden die neuronalen Netze der Informationsverarbeitung zur Kompensation der die Positionierung verfälschenden Einflüsse nach Inbetriebnahme in der Werkstückbearbeitungseinrichtung mit einer Auswahl der Eingangsgrößen - Temperaturen an verschiedenen Teilen einer Werkstückbearbeitungseinrichtung, Motorstrom verschiedener Antriebe, Kühlmitteltemperatur der Werkstückbearbeitungseinrichtung, Umgebungstemperatur, Vorschubsgeschwindigkeit bei der Positionierung des Werkzeugs oder des Werkstücks, Gewicht eines Werkzeugs oder Werkstücks oder Zeit seit Eintritt eines bestimmten Ereignisses sowie insbesondere Werkstückgeometrie und -material, Werkzeugart und -material sowie Werkstückistfehler - weiter trainiert. Durch diese Maßnahme kann der Veränderung der Parameter der Werkstückbearbeitungseinrichtung in der Betriebsphase Rechnung getragen werden. Außerdem können durch diese Maßnahme Parameter als Eingangsgrößen berücksichtigt werden, für die in der Trainingsphase vor der Inbetriebsetzung nicht ausreichend Informationen vorlagen.

In einer weiterhin vorteilhaften Ausgestaltung der Erfindung sind die Grenzen der Werte der Eingangsgrößen der auf trainierbaren neuronalen Netzen basierende Informationsverarbeitung zur Kompensation der die Position verfälschenden Einflüsse beim Training dieser Netze weiter vorgegeben als bei der betrieblichen Anwendung. Dabei können die Werte der Eingangsgrößen, die über die Grenzen der Werte der Eingangsgrößen bei der betrieblichen Anwendung hinausgehen durch Extrapolation gebildet werden, wenn eine diesem Bereich außerhalb der Grenzen keine ausreichende Anzahl von Trainingswerten zur Verfügung steht. An dieser Ausgestaltung ist vorteilhaft, daß die Präzision der Kompensation an den Grenzen der Werte der Eingangsgrößen bei der betrieblichen Anwendung erhöht wird.

In einer weiterhin vorteilhaften Ausgestaltung werden die neuronalen Netze der Informationsverarbeitung zur Kompensation der die Positionierung verfälschenden Einflüsse auf einer Recheneinrichtung implementiert, mit der die Aktoren, der Werkstückbearbeitungseinrichtung die vorzugsweise als Elektromotoren ausgebildet sind, zur Positionierung des Werkstücks oder Werkzeugs angesteuert werden. An dieser Ausgestaltung ist vorteilhaft, daß die Informationsverarbeitung zur Kompensation der die Positionierung verfälschenden Einflüsse zusammen mit der ohnehin notwendigen Ansteuerung der Aktoren implementiert werden kann.

In einer weiteren vorteilhaften Ausgestaltung der Erfindung ist ein Temperaturkompensationsnetz als neuronales Netz mit einer verdeckten Ebene, mit vorzugsweise drei Knoten ausgebildet, wobei jeder Knoten einer Ebene mit jedem Knoten einer anderen Ebene verbunden ist. Diese Ausgestaltung der Erfindung hat sich als besonders vorteilhaft in Hinsicht auf die Präzision der Kompensation und den Trainingsaufwand erwiesen. Die direkte Verknüpfung von Eingangs- und Ausgangsneuronen erlaubt dabei eine gute Modellierung linearer Anteile der Beziehung zwischen verfälschenden Einflußgrößen bei der Positionierung und der Position des Werkstücks oder Werkzeugs.

Ebenfalls als vorteilhaft in Hinsicht auf die Präzision der Kompensation und den Trainingsaufwand hat sich eine Ausgestaltung eines Gewichtskompensationsnetzes als neuronales Netz mit einer verdeckten Ebene mit vorzugsweise elf Knoten herausgestellt. Vorteilhafterweise sind dabei alle neuronalen Netze als Feed-Forward-Netze ausgebildet.

Weitere Vorteile und erfinderische Einzelheiten ergeben sich aus nachfolgender Beschreibung eines Ausführungsbeispiels anhand der Zeichnung und in Verbindung mit den Unteransprüchen. Im einzelnen zeigen:
- FIG 1: eine Werkstückbearbeitungseinrichtung und eine Recheneinheit,
- FIG 2: die Einordnung der Informationsverarbeitung zur Kompensation der die Positionierung verfälschenden Einflüsse in die Steuerungsebene einer Werkstückbearbeitungseinrichtung,
- FIG 3: die hierarchische Gliederung der Informationsverarbeitung zur Kompensation verfälschender Einflußgrößen bei der Positionierung,
- FIG 4: die Schnittstellen eines neuronalen Netzes zur Ermittlung einer korrigierten Sollposition,
- FIG 5: die Schnittstellen eines neuronalen Netzes zur Ermittlung eines Kompensationswertes mit einem Verknüpfungsblock,
- FIG 6: ein Temperaturkompensationsnetz,
- FIG 7: ein Gewichtskompensationsnetz.

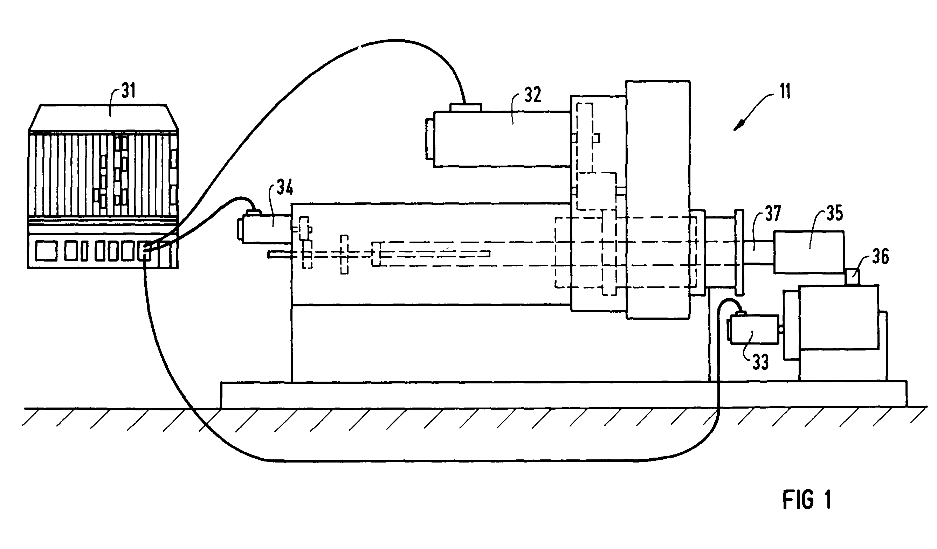

FIG 1 zeigt eine Werkstückbearbeitungseinrichtung 11, und eine Recheneinheit 31, auf der die Funktionen zur Regelung und Steuerung der Werkstückbearbeitungseinrichtung 11 implementiert sind. Die Recheneinheit steuert die Aktoren 32,33 und 34 der Werkstückbearbeitungseinrichtung 11 an, wobei die Aktoren als Elektromotoren ausgebildet sind. Die beispielhafte Ausgestaltung der Werkzeugbearbeitungseinrichtung zeigt eine Drehmaschine, wobei das Werkstück 35 auf einer Spindel 37 angebracht ist, die durch die Antriebseinheit 32 in Rotation versetzt wird. In der beispielhaften Ausführung der Werkstückbearbeitungseinrichtung wird das Werkstück in Richtung der Spindelachse über eine Werkstückpositioniereinrichtung 34 bewegt. Das Werkzeug 36 wird durch eine Werkzeugpositioniereinrichtung 33 bewegt.

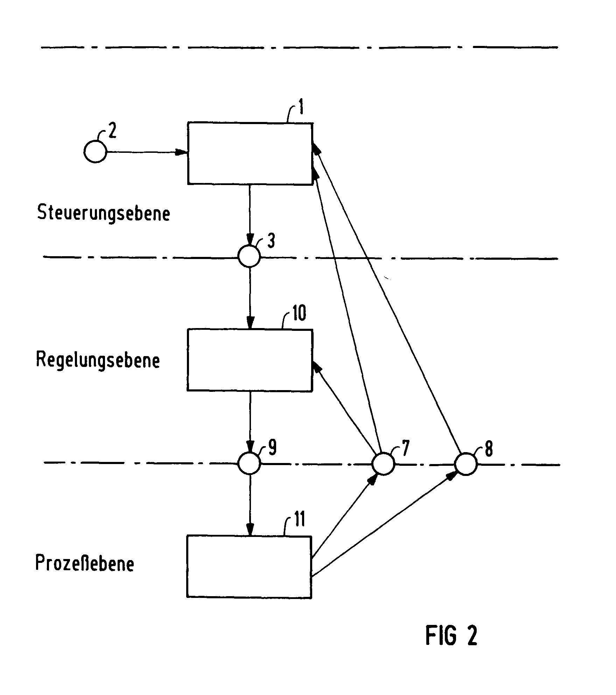

FIG 2 zeigt die funktionale Verknüpfung zwischen Werkstückbearbeitungseinrichtung 11 und ihrer Regelung 10 bzw. ihrer Steuerung sowie die Einbettung der Informationsverarbeitung zur Kompensation der verfälschenden Einflüsse bei der Positionierung als Kompensationsblock 1 in die Steuerungsebene. Der Werkstückbearbeitungseinrichtung 11 wird vom Regler 10 die Regelgröße 9 geliefert. Die Werkstückbearbeitungseinrichtung 11 liefert ihrerseits Prozeßzustandsinformationen, wie die Istposition oder ein Äquivalent 7 sowie Prozeßzustandsinformationen 8, die nicht die Istposition sind. Die Istposition bzw. ihr Äquivalent 7 wird wiederum dem Regler 10 zugeführt, der aus der Istposition oder ihrem Äquivalent 7 und einer in diesem Fall korrigierten Sollposition 3 die Regelgröße 9 generiert. Auf der Steuerungsebene wird von einer nicht abgebildeten Steuerung der Werkstückbearbeitungseinrichtung die Sollposition 2 des Werkstücks 35 oder Werkzeugs 36 erzeugt. Zur Kompensation von Störgrößen wird diese einem Kompensationsblock 1 der die Informationsverarbeitung zur Kompensation der verfälschenden Einflüsse bei der Positionierung repräsentiert, zugeführt. Dieser Kompensationsblock 1 ermittelt eine korrigierte Sollposition 3.

Die Informationen - Sollposition 2, korrigierte Sollposition 3, Regelgröße 9 sowie insbesondere Istposition oder Äquivalent 7 und Prozeßzustandsinformation außer Istposition 8 - stellen Informationsbereiche dar. So kann z.B. die Istposition oder Äquivalent 7, die dem Regler als Eingangsgröße dient, die Istposition im strengen Sinne sein, während die Istposition, die einem Kompensationsblock 1,12 oder 13 als Eingangsgröße dient, die Werkstückgeometrie nach der Bearbeitung sein kann. Vorteilhafterweise wird die Istposition den neuronalen Netzen als Differenz von Soll- und Istposition zugeführt, was zu einer Normierung dieser Information führt und den Trainingsaufwand deutlich verringert. Allen Positionierungsangaben, d.h. Istposition oder Äquivalent 8, Sollposition 2 oder korrigierte Sollposition 3 ist gemeinsam, daß sie sich auf alle drei Raumrichtungen beziehen können. Außerdem enthalten alle obengenannten Informationen eine 'nicht Information', d.h. ein Informationsfluß kann weggelassen werden.

Die Prozeßzustandsinformation 8 außer der Istposition 3 können die Temperaturen an veschiedenen Teilen einer der Werkstückbearbeitungseinrichtung, der Motorstrom verschiedener Antriebe, die Kühlmitteltemperatur der Werkstückbearbeitungseinrichtung, die Umgebungstemperatur, die Vorschubsgeschwindigkeit bei der Positionierung des Werkzeugs oder Werkstücks, das Gewicht eines Werkzeugs oder Werkstücks, die Zerspanungsmenge, Werkstückgeometrie und -material, Werkzeugart und -material oder die Zeit seit Einschnitt eines bestimmten Ereignisses sein.

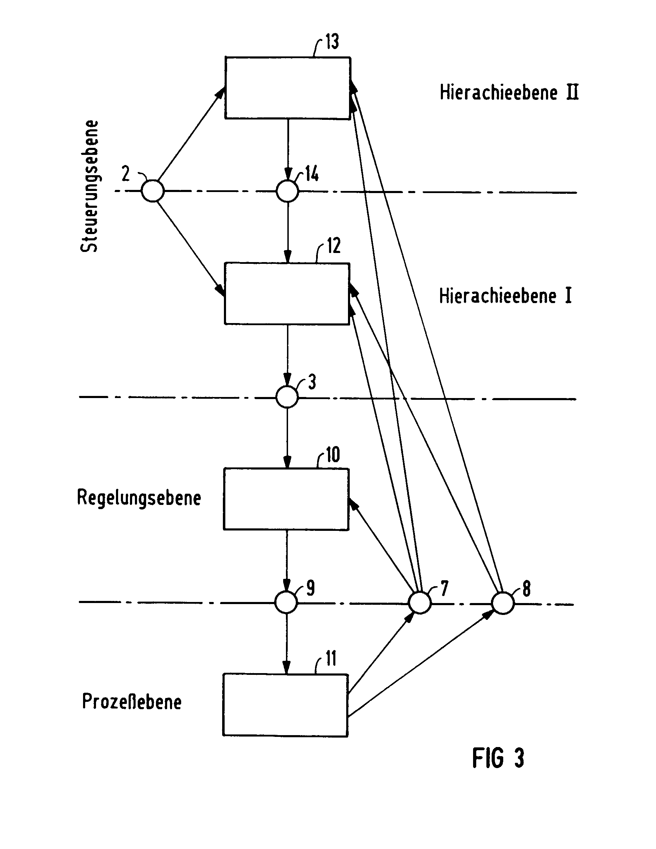

FIG 3 zeigt die hierarchische Gliederung der Informationsverarbeitung zur Kompensation verfälschender Einflußgrößen bei der Positionierung. Dabei bleibt die Funktionalität auf der Prozeßebene und der Regelungsebene gegenüber FIG 2 unverändert. Dagegen ist die Funktionalität des Kompensationsblocks 1 in der Steuerungsebene auf zwei Hierarchieebenen I und II entsprechend auf Kompensationsblock I 12 und Kompensationsblock II 13 verteilt.

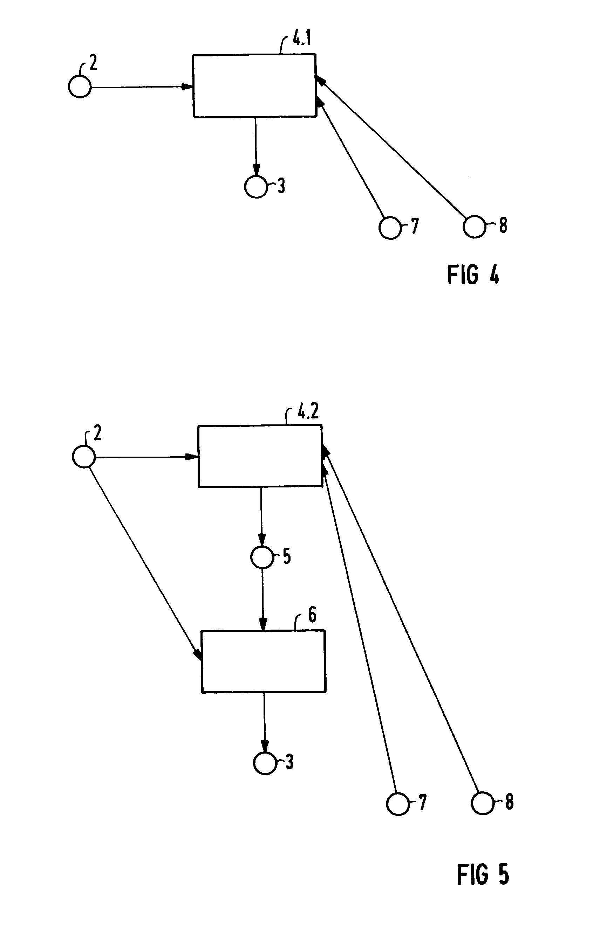

FIG 4 zeigt ein neuronales Netz 4.1 als Kompensationsblock 1,12 oder 13. In der Trainingsphase wird dem neuronalen Netz 4.1 die Sollposition 2, die Istposition oder Äquivalent 7 sowie weitere Prozeßzustandsinformationen 8 außer der Istposition zugeführt. Ausgangsgröße dieses neuronalen Netzes ist eine korrigierte Sollposition 3. Während der Betriebsphase erhält das neuronale Netz keine Informationen mehr über die Istposition oder äquivalente Informationen 7.

FIG 5 zeigt ebenfalls ein neuronales Netz 4.2 als Kompensationsblock 1,12 oder 13, das jedoch um einen Verknüpfungsblock 6 erweitert ist. Gegenüber dem neuronalen Netz 4.1 aus FIG 4 erzeugt das neuronale Netz 4.2 in FIG 5 aus den genannten Eingangsgrößen einen Kompensationswert, mit dem im Verknüpfungsblock 6 die Sollposition 2 zu einer korrigierten Sollposition 3 verknüpft wird.

Bei einem weitestgehend linearen Zusammenhang zwischen Position und einem entsprechenden die Position verfälschenden Einfluß ist es vorteilhaft, auf die Sollposition 2 als Eingangsgröße des neuronalen Netzes 4.2 zu verzichten und als Kompensationswert 5, der Ausgangsgröße des neuronalen Netzes 4.2 einen Proportionalitätsfaktor zu bilden, der durch Multiplikation mit der Sollposition 2 im Verknüpfungsblock 6 zu einer korrigierten Sollposition 3 führt. Ist der lineare Zusammenhang zwischen Position und dem die Positionierung verfälschenden Einfluß nicht gegeben, so wird ein neuronales Netz 4.2 verwendet, das als Kompensationswert 5 eine absolute Abweichung der Position bildet, die durch entsprechende Addition im Verknüpfungsblock 6 mit der Sollposition 2 eine korrigierte Sollposition 3 ergibt. In Bezug auf die Eingangsgröße eines neuronalen Netzes 4.1 und 4.2 zur Kompensation von verfälschenden Einflüssen bei der Positionierung ist es vorteilhaft, diese durch einen nicht abgebildeten Normierungsblock zu normieren, sofern sie nicht von vornherein normierte Größen darstellen, wie z.B. die Abweichung zwischen Soll- und Istposition oder Normierung durch Verzicht auf nichtnormierte Größen, wie z.B. der Sollposition, erreicht wird. Zur Normierung nichtnormierter Eingangsgrößen in einem Normierungsblock eignen sich insbesondere Fuzzy-Methoden.

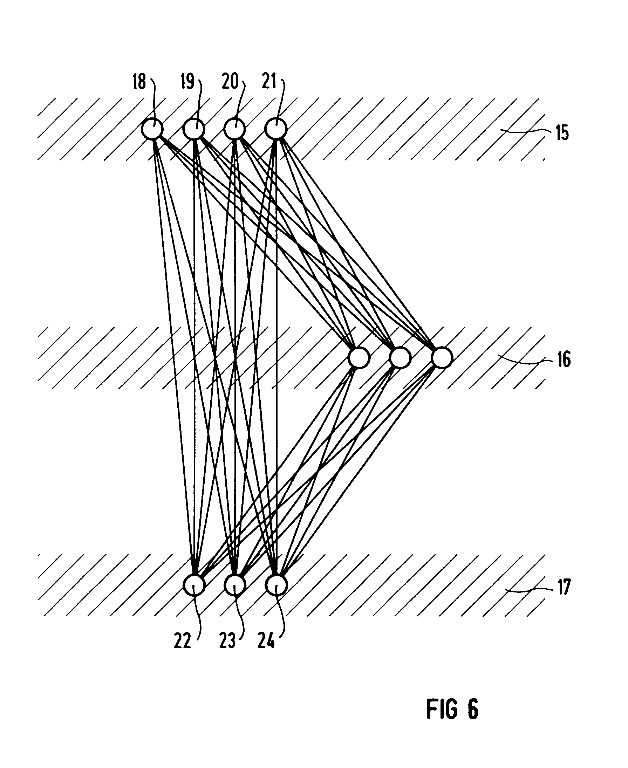

FIG 6 zeigt ein Temperaturkompensationsnetz mit einer Eingangsneuronenebene 15, einer Ebene der verdeckten Neuronen 16 und einer Augangsneuronenebene 17. Die Eingangsneuronenebene enthält vier Neuronen, die Ebene der verdeckten Neuronen 16 enthält drei Neuronen und die Ausgangsneuronenebene 17 ebenfalls drei Neuronen. Alle Neuronen einer Ebene sind mit allen Neuronen der jeweils anderen Ebenen verbunden. Dem vierten Neuron der Eingangsebene 15 wird die Zeit seit einem bestimmten Ereignis zugeführt. Ein solches Ereignis kann das Anschalten der Werkstückbearbeitungseinrichtung oder Wechsel von Leer- auf Last- oder von Last- auf Leerlauf sein. Es hat sich als besonders vorteilhaft erwiesen, anstelle der Zeit eine exponentielle Zeit zu verwenden.

Dem ersten, zweiten und dritten Neuron der Eingangsneuronenebene werden Temperaturen an verschiedenen Stellen der Werkstückbearbeitungseinrichtung zugeführt. Entsprechende Kompensationswerte zur Ermittlung einer korrigierten Sollposition 3 werden von den Neuronen der Ausgangsneuronenebene 22,23 und 24 ausgegeben. Dabei entspricht der vom ersten Neuron 22 der Ausgangsebene 17 ausgegebene Korrekturwert der Positionsverfälschung an dem Teil der Werkstückbearbeitungseinrichtung, an dem die Temperatur aufgenommen wurde, die dem ersten Neuron 18 der Eingangsneuronenebene 15 zugeführt wurde. Entsprechendes gilt bei dem zweiten Neuron der Neuroneneingangsebene 15 und dem zweiten Neuron 23 der Neuronenausgangsebene 17 sowie dem dritten Neuron 20 der Neuroneneingangsebene 15 und dem dritten Neuron 24 der Neuronenausgangsebene 17.

Die mit dem Temperaturkompensationsnetz aus FIG 6 erzeugten Korrekturwerte sind Proportionalitätsfaktoren, aus denen durch Multiplikation mit der Sollposition 2 eine korrigierte Sollposition 3 gebildet werden kann.

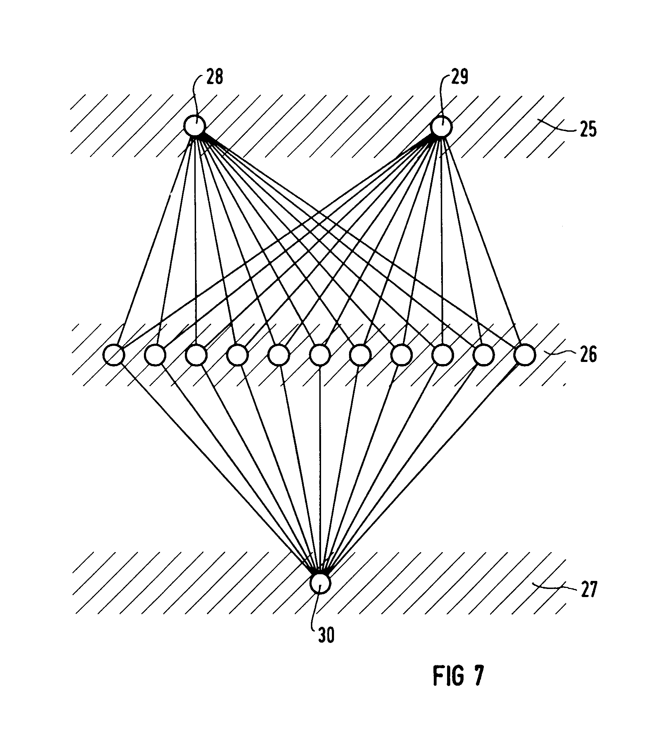

FIG 7 zeigt ein Gewichtskompensationsnetz mit einer Eingangsneuronenebene 25 mit zwei Neuronen, einer Ebene der verdeckten Neuronen 26 mit elf Neuronen und einer Ausgangsneuronenebene 27 mit einem Neuron. Dem ersten Neuron 28 der Eingangsneuronenebene 25 wird das Gewicht des Werkzeugs und Werkstücks zugeführt, daß die Verfälschung der Positionierung verursacht. Dem zweiten Neuron 29 der Neuroneneingangsebene 25 wird die Position des entsprechenden Werkstücks oder Werkzeugs zugeführt. Im vorliegenden Beispiel ist diese Position die Sollposition 2. Das Neuron 30 der Neuronenausgangsebene 29 gibt einen Kompensationswert zur Kompensation des die Positionierung verfälschenden Einflusses des Gewichts des Werkstücks oder Werkzeugs aus. Dieser Kompensationswert ist für das vorliegende Beispiel eine absolute Abweichung der Position, aus der in dem Verknüpfungsblock 6 durch Addition mit der Sollposition 2 eine korrigierte Sollposition 3 gebildet wird.

Durch die Verwendung einer auf trainierbaren neuronalen Netzen basierenden Informationsverarbeitung zur Kompensation von fälschenden Einflüssen bei der Positionierung von Werkstücken oder Werkzeugen einer Werkstückbearbeitungseinrichtung läßt sich bei geringem Speicherbedarf eine deutlich erhöhte Präzision bei der Kompensation dieser verfälschenden Einflüsse gegenüber den im Stand der Technik verwendeten stützstellen- und interpolationsgestützten Verfahren erreichen. Die im Stand der Technik verwendeten Verfahren sind insbesondere dadurch begrenzt, daß die Verfälschung der Positionierung durch nichtlineare Zusammenhänge verschiedener Einflußgrößen erfolgt. Mit der erfindungsgemäßen Verwendung neuronaler Netze zur Kompensation dieser Einflüsse können dagegen hinreichend präzise Korrekturwerte ermittelt werden.

## Patentansprüche

1. Verfahren zur Kompensation von verfälschenden Einflüssen bei der Positionierung von Werkstücken oder Werkzeugen einer Werkstückbearbeitungseinrichtung durch Bildung von Korrekturwerten der verfälschenden Einflüsse, wobei Eingangsgrößen verwendet werden, die die verfälschenden Einflußgrößen repräsentieren, und wobei die Korrekturwerte der verfälschenden Einflüsse durch eine auf trainierbaren neuronalen Netzen basierende Informationsverarbeitung gebildet werden,
**dadurch gekennzeichnet**,
daß die auf trainierbaren neuronalen Netzen basierende Informationsverarbeitung in zwei Hierarchieebenen, Hierarchieebene I und Hierarchieebene II, erfolgt, wobei die neuronalen Netze der Hierarchieebene I vor der Betriebsphase und die der Hierarchieebene II auch in der Betriebsphase trainiert werden.

2. Verfahren nach Anspruch 1,
**dadurch gekennzeichnet**,
daß ein Korrekturwert der verfälschenden Einflüsse bei der Positionierung eine korrigierte Sollposition (3) des Werkstücks oder Werkzeugs ist.

3. Verfahren nach Anspruch 1 oder 2,
**dadurch gekennzeichnet**,
daß ein Korrekturwert der verfälschenden Einflüsse bei der Positionierung ein Kompensationswert (5) ist, der mit der Sollposition (2) des Werkstücks oder Werkzeugs zu einer korrigierten Sollposition (3) verknüpft wird.

4. Verfahren nach Anspruch 1,2 oder 3,
**dadurch gekennzeichnet**,
daß die Kompensationswerte (5) absolute Abweichungen der Position sind, aus denen sich durch Addition mit der Sollposition (2) des Werkstückes oder Werkzeuges eine korrigierte Sollposition (3) ergibt.

5. Verfahren nach einem oder mehreren der Ansprüche 1 bis 4,
**dadurch gekennzeichnet**,
daß vorzugsweise die verfälschenden Einflüsse - Temperatur der Werkstückbearbeitungseinrichtung und Gewicht des Werkstücks oder Werkzeugs - kompensiert werden.

6. Verfahren nach einem oder mehreren der Ansprüche 1 bis 5,
**dadurch gekennzeichnet**,
daß durch als Temperaturkompensationsnetze bezeichnete neuronale Netze überwiegend die Kompensation der verfälschenden Einflußgröße - Temperatur der Werkstückbearbeitungseinrichtung - erfolgt.

7. Verfahren nach einem oder mehreren der Ansprüche 1 bis 6,
**dadurch gekennzeichnet**,
daß Kompensationswerte (5) Proportionalitätsfaktoren der Position sind, aus dem sich durch Multiplikation mit der Sollposition (2) des Werkstücks oder Werkzeugs eine korrigierte Sollposition (3) ergibt.

8. Verfahren nach einem oder mehreren der Ansprüche 1 bis 7,
**dadurch gekennzeichnet**,
daß mindestens eine der Eingangsgrößen der Temperaturkompensationsnetze Temperatur an verschiedenen Stellen der Werkstückbearbeitungseinrichtung, Motorstrom, Kühlmitteltemperatur der Werkstückbearbeitungseinrichtung, Umgebungstemperatur, Vorschubgeschwindigkeit bei der Positionierung des Werkzeugs oder des Werkstücks oder Zeit seit Eintritt eines Ereignisses ist.

9. Verfahren nach einem oder mehreren der Ansprüche 1 bis 8,
**dadurch gekennzeichnet**,
daß die Temperaturkompensationsnetze Korrekturwerte ohne Eingabe der Temperaturen von schnell beweglichen, insbesondere rotierenden Teilen der Werkstückbearbeitungseinrichtung bilden.

10. Verfahren nach einem oder mehreren der Ansprüche 1 bis 9,
**dadurch gekennzeichnet**,
daß der zur Korrektur des verfälschenden Einflusses Temperatur der Werkstückbearbeitungseinrichtung verwendete Wert sich aus mehreren Anteilen zusammensetzt, wobei diese Anteile von separaten neuronalen Netzen erzeugt werden, deren Eingangsgrößen mindestens eine der Größen Temperatur an verschiedenen und ggf. unterschiedlichen Stellen der Werkstückbearbeitungseinrichtung, Motorstrom, Kühlmitteltemperatur der Werkstückbearbeitungseinrichtung, Umgebungstemperatur, Vorschubgeschwindigkeit bei der Positionierung des Werkzeugs oder des Werkstücks oder Zeit sind.

11. Verfahren nach einem oder mehreren der Ansprüche 1 bis
10, **dadurch gekennzeichnet**,
daß für Last- und Leerlauf der Werkstückbearbeitungseinrichtung separate neuronale Netze zur Kompensation des die Positionierung verfälschenden Einflusses Temperatur verwendet werden.

12. Verfahren nach Anspruch 1,2,3 oder 4,
**dadurch gekennzeichnet**,
daß die Kompensation der verfälschenden Einflußgröße - Gewicht des Werkstückes oder Werkzeuges - im wesentlichen durch ein als Gewichtskompensationsnetz bezeichnetes neuronales Netz erfolgt.

13. Verfahren nach Anspruch 1 oder 12,
**dadurch gekennzeichnet**,
daß die Eingangsinformationen der Gewichtskompensationsnetze mindestens eine der Größen, Gewicht des Werkstückes oder Werkzeuges, Position des Werkstückes oder Werkzeuges, Motordrehzahl, Drehzahl der rotierenden Teile oder äquivalente Informationen sind.

14. Verfahren nach einem oder mehreren der Ansprüche 1 bis 13, **dadurch gekennzeichnet**,
daß die neuronalen Netze, insbesondere der Hierarchieebene I, z.B. die Temperatur- und Gewichtskompensationsnetze, verdeckte Neuronen haben, die durch einen Tangenshyperbolikus aktiviert werden.

15. Verfahren nach einem oder mehreren der Ansprüche 1 bis 14, **dadurch gekennzeichnet**,
daß die neuronalen Netze der Hierarchieebene II nach Inbetriebnahme in der Werkstückbearbeitungseinrichtung mit mindestens einer den Betrieb der Werkstückbearbeitungseinrichtung betreffenden Informationen, wie z.B. Temperatur an verschiedenen Stellen der Werkstückbearbeitungseinrichtung, Motorstrom, Kühlmitteltemperatur der Werkstückbearbeitungseinrichtung, Umgebungstemperatur, Vorschubgeschwindigkeit bei der Positionierung des Werkstücks oder Werkzeugs, Zeit seit Eintritt eines Ereignisses, Gewicht des Werkstücks oder Werkzeug, Position des Werkstücks oder Werkzeugs, Motordrehzahl, Drehzahl der rotierenden Teile oder äquivalente Informationen sowie insbesondere Zerspanungsmenge, Werkstückgeometrie und -material, Werkzeugart und -material und Werkstückistfehler trainiert werden, wobei die Ausgangsinformation dieser neuronalen Netze entweder Kompensationswerte (5) sind, mit denen die Sollposition (2) korrigiert wird, oder korrigierte Sollpositionen (3) sind.

16. Verfahren nach einem oder mehreren der Ansprüche 1 bis 14, **dadurch gekennzeichnet**,
daß die neuronalen Netze der Hierarchieebene II nach Inbetriebnahme in der Werkstückbearbeitungseinrichtung mit mindestens einer der den Betrieb der Werkstückbearbeitungseinrichtung betreffenden Informationen, wie z.B. Temperatur an verschiedenen Stellen der Werkstückbearbeitungseinrichtung, Motorstrom, Kühlmitteltemperatur der Werkstückbearbeitungseinrichtung, Umgebungstemperatur, Vorschubgeschwindigkeit bei der Positionierung des Werkstücks oder Werkzeugs, Zeit seit Eintritt eines Ereignisses, Gewicht des Werkstücks oder Werkzeug, Position des Werkstücks oder Werkzeugs, Motordrehzahl, Drehzahl der rotierenden Teile oder äquivalente Informationen sowie insbesondere Zerspanungsmenge, Werkstückgeometrie und -material, Werkzeugart und -material und Werkstückistfehler trainiert werden, wobei die Ausgangsinformationen dieser neuronalen Netze Werte sind, mit denen die zur Korrektur der verfälschenden Einflüsse verwendbaren Werte die durch neuronale Netze auf Hierarchieebene I gebildet worden sind, korrigiert werden.

17. Verfahren nach einem oder mehreren der Ansprüche 1 bis 15, **dadurch gekennzeichnet**,
daß die Grenzen der Werte der Eingangsgrößen der neuronalen Netze der Hierarchieebene I und/oder II beim Training dieser Netze weiter vorgegeben werden als bei der betrieblichen Anwendung.

18. Verfahren nach einem oder mehreren der Ansprüche 1 bis 17, **dadurch gekennzeichnet**,
daß die neuronalen Netze auf einer Recheneinrichtung implementiert sind, mit der die Aktoren, die vorzugsweise als Elektromotoren ausgebildet sind, zur Positionierung des Werkstücks oder Werkzeugs angesteuert werden.

19. Einrichtung zur Kompensation von verfälschenden Einflüssen bei der Positionierung von Werkstücken oder Werkzeugen einer Werkstückbearbeitungseinrichtung durch Bildung von Korrekturwerten der verfälschenden Einflüsse gemäß einem Verfahren nach einem der Ansprüche 1 bis 18, wobei die Einrichtung zur Kompensation der verfälschenden Einflüssen bei der Positionierung von Werkstücken oder Werkzeugen eine auf trainierbaren neuronalen Netzen basierende Informationsverarbeitung zur Bildung der Korrekturwerte der verfälschenden Einflüsse in Abhängigkeit von Eingangsgrößen, die die verfälschenden Einflußgrößen repräsentieren, aufweist,
**dadurch gekennzeichnet**,
daß die auf trainierbaren neuronalen Netzen basierende Informationsverarbeitung zwei Hierarchieebenen, Hierarchieebene I und Hierarchieebene II, aufweist, wobei die neuronalen Netze der Hierarchieebene I vor der Betriebsphase und die der Hierarchieebene II auch in der Betriebsphase trainiert werden.

20. Einrichtung nach Anspruch 19,
**dadurch gekennzeichnet**,
daß die Temperaturkompensationsnetze als neuronale Netze ausgebildet sind, bei denen jeder Knoten einer Ebene mit jedem Knoten einer anderen Ebene verbunden ist.

21. Einrichtung nach Anspruch 19 oder 20,
**dadurch gekennzeichnet**,
daß die Gewichtskompensationsnetze als neuronale Netze mit einer verdeckten Ebene (26) mit vorzugsweise elf Knoten ausgebildet sind.

22. Einrichtung nach Anspruch 19, 20 oder 21,
**dadurch gekennzeichnet**,
daß die neuronalen Netze, z.B. die Temperatur- und Gewichtskompensationsnetze, als Feed-Forward-Netze ausgebildet sind.

## Claims

1. Method for compensating for falsifying influences when positioning workpieces or tools of a workpiece machining device by forming correction values for the falsifying influences, wherein input variables representing the falsifying influencing variables are used, and wherein the correction values for the falsifying influences are formed by an information processing system based on trainable neural networks, characterised in that the information processing system based on trainable neural networks is divided into two hierarchical levels, hierarchical level I and hierarchical level II, wherein the neural networks of hierarchical level I are trained before the operating phase and those of hierarchical level II are also trained in the operating phase.

2. Method according to claim 1,
characterised in that a correction value for the falsifying influences when positioning is a corrected desired position (3) of the workpiece or tool.

3. Method according to claim 1 or 2,
characterised in that a correction value for the falsifying influences when positioning is a compensation value (5) which is linked with the desired position (2) of the workpiece or tool to form a corrected desired position (3) .

4. Method according to claim 1, 2 or 3,
characterised in that the compensation values (5) are absolute deviations of the position, from which a corrected desired position (3) is obtained by addition with the desired position (2) of the workpiece or tool.

5. Method according to one or more of claims 1 to 4,
characterised in that the falsifying influences - temperature of the workpiece machining device and weight of the workpiece or tool - are compensated.

6. Method according to one or more of claims 1 to 5,
characterised in that the falsifying influencing variable - temperature of the workpiece machining device - is predominantly compensated by neural networks called temperature compensation networks.

7. Method according to one or more of claims 1 to 6,
characterised in that compensation values (5) are proportionality factors of the position, from which a corrected desired position (3) is obtained by multiplication with the desired position (2) of the workpiece or tool.

8. Method according to one or more of claims 1 to 7,
characterised in that at least one of the input variables of the temperature compensation networks is the temperature at various points of the workpiece machining device, motor current, coolant temperature of the workpiece machining device, ambient temperature, feed speed when positioning the tool or workpiece or time since the commencement of an event.

9. Method according to one or more of claims 1 to 8,
characterised in that the temperature compensation networks form correction values without the input of the temperatures of rapidly moving, in particular rotating parts of the workpiece machining device.

10. Method according to one or more of claims 1 to 9,
characterised in that the value used to correct the falsifying influence - temperature of the workpiece machining device - is composed of a plurality of components, wherein these components are produced by separate neural networks whose input variables are at least one of the variables - temperature at various and optionally different points of the workpiece machining device, motor current, coolant temperature of the workpiece machining device, ambient temperature, feed speed when positioning the tool or workpiece or time.

11. Method according to one or more of claims 1 to 10,
characterised in that separate neural networks for compensating for the influence - temperature - which falsifies the positioning are used for load and no-load conditions of the workpiece machining device.

12. Method according to claim 1, 2, 3 or 4,
characterised in that the falsifying influencing variable - weight of the workpiece or tool - is substantially compensated by a neural network called a weight compensation network.

13. Method according to claim 1 or 12,
characterised in that the input information of the weight compensation networks is at least one of the variables - weight of the workpiece or tool, position of the workpiece or tool, motor speed, speed of the rotating parts or equivalent information.

14. Method according to one or more of claims 1 to 13,
characterised in that the neural networks, in particular of hierarchical level I, e.g. the temperature and weight compensation networks, have concealed neurons which are activated by a hyperbolic tangent.

15. Method according to one or more of claims 1 to 14,
characterised in that the neural networks of hierarchical level II are trained after start-up in the workpiece machining device with at least one of the items of information relating to the operation of the workpiece machining device, such as, e.g. temperature at various points of the workpiece machining device, motor current, coolant temperature of the workpiece machining device, ambient temperature, feed speed when positioning the workpiece or tool, time since the commencement of an event, weight of the workpiece or tool, position of the workpiece or tool, motor speed, speed of the rotating parts or equivalent information, as well as, in particular, chip production, workpiece geometry and material, tool type and material and actual workpiece errors, wherein the output information of these neural networks is constituted either by compensation values (5), with which the desired position (2) is corrected, or corrected desired positions (3).

16. Method according to one or more of claims 1 to 14,
characterised in that the neural networks of hierarchical level II are trained after start-up in the workpiece machining device with at least one of the items of information relating to the operation of the workpiece machining device, such as, e.g. temperature at various points of the workpiece machining device, motor current, coolant temperature of the workpiece machining device, ambient temperature, feed speed when positioning the workpiece or tool, time since the commencement of an event, weight of the workpiece or tool, position of the workpiece or tool, motor speed, speed of the rotating parts or equivalent information, as well as, in particular, chip production, workpiece geometry and material, tool type and material and actual workpiece errors, wherein the output information of these neural networks is constituted by values with which the values which can be used to correct the falsifying influences and which have been formed by the neural networks at hierarchical level I are corrected.

17. Method according to one or more of claims 1 to 15,
characterised in that the limits of the values of the input variables of the neural networks of hierarchical level I and/or II are predetermined to a greater extent during training of these networks than during operational use.

18. Method according to one or more of claims 1 to 17,
characterised in that the neural networks are implemented at a computing device, by means of which the actuators, which are preferably formed as electric motors, for positioning the workpiece or tool are triggered.

19. Device for compensating for falsifying influences when positioning workpieces or tools of a workpiece machining device by forming correction values for the falsifying influences according to a method as claimed in one of claims 1 to 18, wherein the device for compensating for the falsifying influences when positioning workpieces or tools comprises an information processing system based on trainable neural networks for forming the correction values for the falsifying influences in accordance with input variables representing the falsifying influencing variables, characterised in that the information processing system based on trainable neural networks comprises two hierarchical levels, hierarchical level I and hierarchical level II, wherein the neural networks of hierarchical level I are trained before the operating phase and those of hierarchical level II are also trained in the operating phase.

20. Device according to claim 19,
characterised in that the temperature compensation networks are formed as neural networks, in which each node of one level is connected to each node of another level.

21. Device according to claim 19 or 20,
characterised in that the weight compensation networks are formed as neural networks with a concealed level (26), preferably with eleven nodes.

22. Device according to claim 19, 20 or 21,
characterised in that the neural networks, e.g. the temperature and weight compensation networks, are formed as feed forward networks.

## Revendications

1. Procédé de compensation d'influences faussant le positionnement de pièces ou d'outils dans une unité d'usinage de pièces par la formation de valeurs correctrices de ces influences, des grandeurs d'entrée qui représentent les grandeurs d'influence étant utilisées et les valeurs correctrices de ces influences étant formées par un traitement d'informations basé sur des réseaux neuronaux à apprentissage,
caractérisé par le fait que
le traitement d'informations basé sur des réseaux neuronaux à apprentissage s'effectue en deux niveaux hiérarchiques, à savoir un niveau hiérarchique I et un niveau hiérarchique II, l'apprentissage des réseaux neuronaux du niveau hiérarchique I ayant lieu avant la phase d'exploitation et celui du niveau hiérarchique II ayant lieu aussi pendant la phase d'exploitation.

2. Procédé selon la revendication 1,
caractérisé par le fait que
une valeur correctrice des influences lors du positionnement est une position de consigne corrigée (3) de la pièce ou de l'outil.

3. Procédé selon la revendication 1 ou 2,
caractérisé par le fait que
une valeur correctrice des influences lors du positionnement est une valeur de compensation (5) qui est combinée à la position de consigne (2) de la pièce ou de l'outil pour donner une position de consigne corrigée (3).

4. Procédé selon la revendication 1, 2 ou 3,
caractérisé par le fait que
les valeurs de compensation (5) sont des écarts absolus de la position à partir desquels on obtient par addition avec la position de consigne (2) de la pièce ou de l'outil une position de consigne corrigée (3).

5. Procédé selon une ou plusieurs des revendications 1 à 4,
caractérisé par le fait que
l'on compense de préférence les influences suivantes : température de l'unité d'usinage de pièces et poids de la pièce ou de l'outil.

6. Procédé selon une ou plusieurs des revendications 1 à 5,
caractérisé par le fait que
la compensation de la grandeur d'influence - température de l'unité d'usinage de pièces - s'effectue principalement au moyen de réseaux neuronaux appelés réseaux de compensation de température.

7. Procédé selon une ou plusieurs des revendications 1 à 6,
caractérisé par le fait que
des valeurs de compensation (5) sont des facteurs de proportionnalité de la position à partir desquels on obtient par multiplication avec la position de consigne (2) de la pièce ou de l'outil une position de consigne corrigée (3).

8. Procédé selon une ou plusieurs des revendications 1 à 7,
caractérisé par le fait que
au moins l'une des grandeurs d'entrée des réseaux de compensation de température est: la température en différents points de l'unité d'usinage de pièces, le courant de moteur, la température de fluide de refroidissement de l'unité d'usinage de pièces, la température ambiante, la vitesse d'avance lors du positionnement de l'outil ou de la pièce ou le temps depuis l'occurrence d'un certain événement.

9. Procédé selon une ou plusieurs des revendications 1 à 8,
caractérisé par le fait que
les réseaux de compensation de température forment des valeurs correctrices sans utiliser les températures d'éléments mobiles rapides, notamment d'éléments tournant rapidement, de l'unité d'usinage de pièces.

10. Procédé selon une ou plusieurs des revendications 1 à 9,
caractérisé par le fait que
la valeur utilisée pour la correction de l'influence température de l'unité d'usinage de pièces est constituée de plusieurs composantes qui sont produites par des réseaux neuronaux séparés dont les grandeurs d'entrée sont au moins l'une des grandeurs : température en divers et éventuellement différents points de l'unité d'usinage de pièces, courant de moteur, température de fluide de refroidissement de l'unité d'usinage de pièces, température ambiante, vitesse d'avance lors du positionnement de l'outil ou de la pièce ou temps.

11. Procédé selon une ou plusieurs des revendications 1 à 10,
caractérisé par le fait que
l'on utilise pour la charge et pour la marche à vide de l'unité d'usinage de pièces des réseaux neuronaux séparés pour la compensation de l'influence - température - faussant le positionnement.

12. Procédé selon la revendication 1, 2, 3 ou 4,
caractérisé par le fait que
la compensation de la grandeur d'influence - poids de la pièce ou de l'outil - s'effectue principalement au moyen d'un réseau neuronal appelé réseau de compensation de poids.

13. Procédé selon la revendication 1 ou 12,
caractérisé par le fait que les informations d'entrée des réseaux de compensation de poids sont au moins l'une des grandeurs : poids de la pièce ou de l'outil, position de la pièce ou de l'outil, vitesse de rotation du moteur, vitesse de rotation des éléments tournants ou informations équivalentes.

14. Procédé selon une ou plusieurs des revendications 1 à 13,
caractérisé par le fait que
les réseaux neuronaux, notamment du niveau hiérarchique I, par exemple les réseaux de compensation de température et les réseaux de compensation de poids, ont des neurones cachés qui sont activés par une hyperbole tangentielle.

15. Procédé selon une ou plusieurs des revendications 1 à 14,
caractérisé par le fait que
les réseaux neuronaux du niveau hiérarchique II sont encore soumis à un apprentissage après la mise en service dans l'unité d'usinage de pièces avec au moins l'une des informations concernant l'exploitation de l'unité d'usinage de pièces, par exemple température en différents points de l'unité d'usinage de pièces, courant de moteur, température de fluide de refroidissement de l'unité d'usinage de pièces, température ambiante, vitesse d'avance lors du positionnement de la pièce ou de l'outil, temps depuis l'occurrence d'un certain événement, poids de la pièce ou de l'outil, position de la pièce ou de l'outil, vitesse de rotation du moteur, vitesse de rotation des éléments tournants ou informations équivalentes et notamment quantité de copeaux enlevés, géométrie et matière de la pièce, type et matière de l'outil et erreur réelle de la pièce, l'information de sortie de ces réseaux neuronaux étant soit des valeurs de compensation (5), avec lesquelles on corrige la position de consigne (2), soit des positions de consigne corrigées (3).

16. Procédé selon une ou plusieurs des revendications 1 à 14,
caractérisé par le fait que
les réseaux neuronaux du niveau hiérarchique II sont encore soumis à un apprentissage après la mise en service dans l'unité d'usinage de pièces avec au moins l'une des informations concernant l'exploitation de l'unité d'usinage de pièces, par exemple température en différents points de l'unité d'usinage de pièces, courant de moteur, température de fluide de refroidissement de l'unité d'usinage de pièces, température ambiante, vitesse d'avance lors du positionnement de la pièce ou de l'outil, temps depuis l'occurrence d'un certain événement, poids de la pièce ou de l'outil, position de la pièce ou de l'outil, vitesse de rotation du moteur, vitesse de rotation des éléments tournantes ou informations équivalentes et notamment quantité de copeaux enlevés, géométrie et matière de la pièce, type et matière de l'outil et erreur réelle de la pièce, les informations de sortie de ces réseaux neuronaux étant des valeurs avec lesquelles on corrige les valeurs qui sont utilisables pour la correction des influences et qui ont été formées par des réseaux neuronaux au niveau hiérarchique I.

17. Procédé selon une ou plusieurs des revendications 1 à 15,
caractérisé par le fait que
les limites des valeurs des grandeurs d'entrées des réseaux neuronaux du niveau hiérarchique I et/ou II sont prescrites plus largement lors de l'apprentissage de ces réseaux que lors de l'utilisation en exploitation.

18. Procédé selon une ou plusieurs des revendications 1 à 17,
caractérisé par le fait que
les réseaux neuronaux sont mis en oeuvre sur un ordinateur avec lequel les actionneurs, qui sont conçus de préférence comme des moteurs électriques, sont commandés pour le positionnement de la pièce ou de l'outil.

19. Dispositif pour la compensation d'influences faussant le positionnement de pièces ou d'outils d'une unité d'usinage de pièces par formation de valeurs correctrices des influences selon un procédé selon l'une des revendications 1 à 18, le dispositif pour la compensation d'influences faussant le positionnement de pièces ou d'outils comportant un traitement d'informations basé sur des réseaux neuronaux à apprentissage pour la formation des valeurs correctrices des influences en fonction de grandeurs d'entrée qui représentent les grandeurs d'influence,
caractérisé par le fait que
le traitement d'informations basé sur des réseaux neuronaux à apprentissage comporte deux niveaux hiérarchiques, à savoir un niveau hiérarchique I et un niveau hiérarchique II, l'apprentissage des réseaux neuronaux du niveau hiérarchique I ayant lieu avant la phase d'exploitation et celui du niveau hiérarchique II ayant lieu aussi pendant la phase d'exploitation.

20. Dispositif selon la revendication 19,
caractérisé par le fait que
les réseaux de compensation de température sont conçus sous forme de réseaux neuronaux dont chaque noeud d'un niveau est relié à chaque noeud d'un autre niveau.

21. Dispositif selon la revendication 19 ou 20,
caractérisé par le fait que
les réseaux de compensation de poids sont conçus sous forme de réseaux neuronaux avec un niveau caché (26) ayant de préférence onze noeuds.

22. Dispositif selon la revendication 19, 20 ou 21,
caractérisé par le fait que
les réseaux neuronaux, par exemple les réseaux de compensation de température et les réseaux de compensation de poids, sont conçus comme des réseaux du type Feed-Forward.
